# EUROPEAN PATENT SPECIFICATION

(11) **EP 3 938 457 B1**
(45) Date of publication and mention of the grant of the patent: **28.02.2024**
(21) Application number: 19919586.8
(22) Date of filing: 15.03.2019
(51) Int. Cl.: C09J 163/00, C09J 11/04, C08G 59/68, C08G 59/70, C09J 11/00, C09K 3/10

(54) **THERMALLY CONDUCTIVE POTTING COMPOSITION**
WÄRMELEITENDE VERGUSSZUSAMMENSETZUNG
COMPOSITION D'ENROBAGE THERMOCONDUCTRICE

(43) Date of publication of application: 19.01.2022
(73) Proprietor: Henkel AG & Co. KGaA, 40589 Düsseldorf (DE)
(72) Inventor: HUANG, Lei, Shanghai 201203 (CN); WU, Hao, Shanghai 200032 (CN); XIE, Xuan, Shanghai 201299 (CN); QIU, Xueyu, Shanghai 201299 (CN)
(86) International application number: PCT/CN2019/078237
(87) International publication number: WO 2020/186379

(56) References cited:
- CN-A- 103 172 973
- CN-A- 104 479 606
- JP-A- 2012 117 033

## Description

### Technical field

This invention relates to a thermally conductive potting composition, comprising a first part comprising at least one epoxy resin; at least one thermally conductive filler; and at least one metal complex; and a second part comprising at least one curing agent. The first part of the thermally conductive potting composition exhibits high thixotropic index and therefore the first part is easily stored. After the first part and the second part are mixed, the thermally conductive potting composition exhibits low thixotropic index and the meets the requirement for potting process.

### Background of the invention

With the development of transportation, electronic, general industry, it is desirable to have smaller and lighter electrical parts, such as battery, motor, and generator. Insolation materials are often used to encapsulate the sensitive components of the electrical parts in order to keep them from moisture and provide cushions to avoid damages from external impacts, such as shaking and bumping. One challenge is to develop an insulation material that is able to conduct the heat efficiently from the sensitive components of the electrical parts. CN103172973A discloses High thermal-conductivity polymer composite material comprises epoxy resin and hyperbranched polyaryl amide-grafted ceramic thermal-conductivity filler particles.

CN104479606A discloses organic silicone epoxy sealant used as protective packaging material for printed circuit boards, comprises diphenylsilanediol modified epoxy resin, boron-modified methyl silicone resin, liquid acid anhydride and boron nitride ceramic powder.

JP2012117033 A discloses Liquid sealing material for electronic component, comprises epoxy resin, aromatic amine hardening agent, metal complex, coupling agent containing vinyl trimethoxysilane, and silica filler which is surface-treated by silane coupling agent.

Potting compositions are commonly introduced to fill in the electrical parts and cured as insulation materials to encapsulate the sensitive components of the electrical parts. The potting composition often comprises two parts. One part contains resin and thermally conductive fillers to enhance the thermal conductivity of the potting composition, and the other part contains curing agent for the resin. However, most thermally conducive fillers tend to subside after the part that contains the thermally conductive fillers is stored for a certain period of time. The traditional method adds fumed silica in the potting composition to solve the filler sedimentation problem. Fumed silica functions to reduce the mobility of the thermally conductive fillers in the liquid system by increasing the yield value of the liquid system. However, after the first part and the second part are mixed, the potting composition shows poor flowability due to the incorporation of fumed silica and is hard to process for potting.

Therefore, there is a need to develope a potting composition that has no or little filler sedimentation issue during storage and good flowability when needs to be applied to encapsulate the sensitive components of the electrical parts.

### Summary of the invention

The present invention relates to a thermally conductive potting composition, comprising:
(a) a first part comprising:
   at least one epoxy resin;
   at least one thermally conductive filler; and
   at least one metal complex;
   wherein the metal complex has one organic ligand represented by the following general formula (1) which is coordinatively bounded to a metal atom in the metal complex, 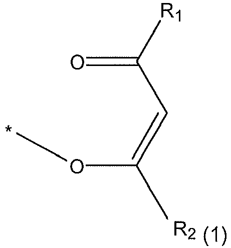 wherein * represents a coordinating position of the metal atom in the metal complex; and R₁ and R₂ are identical or different, and independently represent optionally substituted univalent organic groups.
(b) a second part comprising at least one epoxy curing agent;

The first part of the thermally conductive potting composition of the invention exhibits no or little filler sedimentation during storage and the thermally conductive potting composition has good flowability after the two parts are mixed.

The present invention also relates to a cured product of the thermally conductive potting composition.

The present invention also relates to an article bonded, coated, or filled with the cured thermally conductive potting composition.

The present invention also relates to a process of making a thermally conductive potting composition comprising steps of:
(a) preparing a first part:
   i) mixing at least one epoxy resin with at least one reactive diluent homogenously;
   ii) adding at least one metal complex to the mixture from step i) and mixing the mixture to homogeneity; and
   iii) adding at least one thermally conductive filler to the mixture from step ii) and mixing the mixture to homogeneity;
(b) preparing a second part by mixing at least one curing agent; and
(c) mixing the first part and the second part at a desired ratio homogenously;
   wherein the metal complex in the first part has one organic ligand represented by the following general formula (1) which is coordinatively bounded to a metal atom in the metal complex, 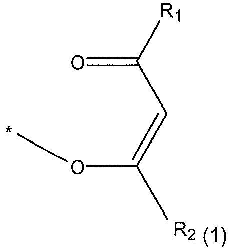
   wherein * represents a coordinating position of the metal atom in the metal complex; and R₁ and R₂ are identical or different, and independently represent optionally substituted univalent organic groups.

### Detailed description of the invention

in the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

All references cited in the present specification are hereby incorporated by reference in their entirety.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

In the context of this disclosure, a number of terms shall be utilized.

The term "diameter" means the longest length as measured in a straight line passing through the center of gravity of the thermally conductive filler.

The term "metal complex" refers to chemical complex compounds comprising a central metal atom or ion complexed with at least one ligand.

The term "organic group" refers to a group that includes at least one carbon atom. Exemplary of the organic group includes but not limited to an alkyl group, such as methyl, ethyl, propyl, butyl, pentyl, hexyl, isopropyl, tertiary butyl, isobutyl, chloromethyl, 3,3,3-trifluoropropyl and the groups alike; an alkenyl group, such as vinyl, allyl, butenyl, pentenyl, hexenyl and the groups alike; an aralkyl group, such as benzyl, phenethyl, 2-(2,4,6-trimethylphenyl)propyl and the groups alike; or an aryl group, such as phenyl, tolyl, xyxyl and the groups alike; and an alkoxyl group, such as methoxyl, ethoxyl, butoxyl and the groups alike.

### The first part

### <Epoxy resin>

The first part of the present invention comprises at least one epoxy resin. The epoxy resin of the first part refers to any common epoxy resin containing at least one epoxy group per molecule, and preferably containing multiple epoxy groups per molecule. Exemplary of the epoxy resin includes but not limited to bisphenol A epoxy resins, bisphenol F epoxy resins, biphenyl epoxy resins, naphthalene epoxy resins, diphenyl ether epoxy resins, diphenyl thioether epoxy resins, hydroquinone epoxy resins, biphenyl novolac epoxy resins, cresol novolac epoxy resins, phenol novolac epoxy resins, bisphenol A novolac epoxy resins, trisphenol epoxy resins, tetraphenylolethane epoxy resins, and any combination thereof.

Examples of commercially available epoxy resins are, for example, D.E.R. 331 from Olin Corporation; EPIKOTE 240 from Hexion; and EPICLON N-665 from Dainippon Ink and Chemicals Inc.

In some embodiments of the present invention, the amount of epoxy resin in the first part is preferably from 2 to 70%, more preferably from 5 to 50%, and even more preferably from 7 to 20% by weight based on the total weight of the first part.

### <Thermally conductive filler>

The first part of the present invention comprises at least one thermally conductive filler. The thermally conductive filler of the present invention may be selected from a metal oxide, such as aluminum oxide, titanium oxide, zinc oxide, magnesium oxide, and the like; a metal nitride, such as boron nitride, and aluminum nitride, magnesium nitride, and the like; a metal hydroxide, such as aluminum hydroxide, magnesium hydroxide, and like; a metal powder, such as copper powder, aluminum powder, and the like; other common thermally conductive fillers, such as silicon carbide, silicon boride, graphite, carbon nanotube, carbon fiber, and the like. The thermally conductive fillers can be used alone or in combination. Preferably, the thermally conductive filler is selected from at least one of metal oxides, metal hydroxides, and metal nitrides. More preferably, the thermally conductive filler is at least one of metal oxides. Even more preferably, the thermally conductive filler contains at least one aluminum oxide to avoid filler sedimentation problem in the first part.

The shape of the thermally conductive filler of the present invention may be a regular or irregular shape and includes but is not limited to polygon, cube, oval, sphere, needle, flake, plate or any combination thereof. The thermally conductive filler may also be in the form of aggregated particles. Preferably, the thermally conductive filler is in a spherical shape.

The average diameter of the thermally conductive filler of the present invention is from 0.01 to 150 µm, preferably from 2 to 70 µm, and more preferably from 5 to 50µm. The average diameter of the thermally conductive filler can be measured with any diameter analyzer known in the art. The average diameter of the thermally conductive filler is preferably measured by light scattering method using LS-POP(6) available from Zhuhai OMEC Instruments Co., Ltd.

In some embodiments of the present invention, the first part comprises a first thermally conductive filler and a second thermally conductive filler which have different average diameters. The first thermally conductive filler has an average diameter greater than or equal to 0.01 µm and less than 20 µm, preferably from 2 to 15 µm, and more preferably from 4 to 10 µm; and the second thermally conductive filler has an average diameter from 20 to 150 µm, preferably from 20 to 70 µm, and more preferably from 20 to 50 µm.

In preferred embodiments of the present invention, the first part comprises a first spherical aluminum oxide filler with an average diameter from 2 to 15 µm, and a second spherical aluminum oxide filler with an average diameter from 20 to 70 µm. In further embodiments, the first part comprises a first spherical aluminum oxide filler with an average diameter from 4 to 10 µm, and a second spherical aluminum oxide filler with an average diameter from 20 to 50 µm.

Examples of commercially available thermally conductive fillers are, for example, BAK 10 and BAK 40 from Shanghai Bestry Performance Materials Co., Ltd.; RY20 and CF5 from Shanghai Yu Rui New Material technology Co., Ltd.; SJR4 and SJR20 from Anhui Estone Materials technology Co., Ltd..

In some embodiments of the present invention, the amount of thermally conductive filler in the first part is preferably from 20 to 95%, and more preferably from 50 to 70% by weight based on the total weight of the first part.

### <Metal complex>

The first part of the present invention has one metal complex comprising at least one organic ligand represented by the following general formula (1) which is coordinatively bounded to a metal atom in the metal complex, 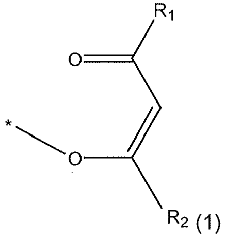 wherein * represents a coordinating position of a metal atom in the metal complex; and R₁ and R₂ are identical or different, and independently represent optionally substituted univalent organic groups. Preferably, R₁ and R₂ are optionally substituted C₁ to C₂₀ alkyl groups, alkenyl groups, or alkoxyl groups. One specific example of the metal complex comprising at least one organic ligand represented by the general formula (1), aluminum acetylacetonate, is shown below as formula (2).

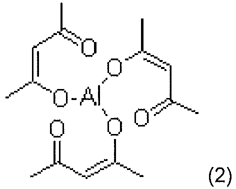

The metal atom in the metal complex comprising at least one organic ligand represented by the general formula (1) is not particularly limited, and includes, for example, aluminum, titanium, and zinc. Preferably, the metal atom is aluminum or titanium.

In some embodiments of the present invention, the metal complex has one organic ligand represented by the general formula (1) is preferably in a liquid form. For example, the metal complex comprising at least one organic ligand represented by the general formula (1) has a viscosity less than or equal to 1000 cps at 25 °C measured according to ASTM D 2983-04.

In preferred embodiments, the metal complex comprises only one organic ligand represented by the general formula (1). Surprisingly, the first part containing metal complex comprising only one organic ligand represented by the general formula (1) has less filler sedimentation during storage than those containing metal complex comprising multiple organic ligands represented by the general formula (1). The thermally conductive potting composition comprising the first part that contains metal complex comprising only one organic ligand represented by the general formula (1) also shows better flowability after the first part and the second part are mixed.

Examples of commercially available metal complex compound comprising at least one organic ligand represented by the general formula (1) are, for example, Plenact AL-M from Ajinomoto fine-techno Co., Inc.; and ACA-AA2 from Nanjing Capature Chemical Co.Ltd..

In some embodiments of the present invention, the amount of metal complex compound comprising at least one organic ligand represented by the general formula (1) in the first part is preferably from 0.01 to 10%, more preferably from 0.4 to 5%, and even more preferably from 0.8 to 2% by weight based on the total weight of the first part.

### The second part

### <Curing agent>

The second part of the present invention comprises at least one curing agent. The curing agent of the second part refers to any commonly used curing agent for epoxy systems, and includes but is not limited to polyamide, amine, imidazole and the derivatives thereof. Illustrative curing agent include polyamide resin based on dimerized fatty acid and polyamines, methyldiethanolamine, triethanolamine, diethylaminopropylamine, benzyldimethyl amine, m-xylylenedi(dimethylamine), benzyldimethylamine, 2-(dimethylaminomethyl)phenol, 2,6-bis(dimethylaminomethyl)phenol, 2,4-bis(dimethylaminomethyl)phenol, 2,4,6-tris(dimethylaminomethyl)phenol, 1-methylimidazole, 2-methylimidazole and 2,4-diethylimidazole. The curing agent can be used alone or in any combination.

Examples of commercially available curing agent, for example, are Versamid 140 from Gabriel Performance Products; Ancamine TEPA from Evonik; Ajicure PN-H from Ajinomoto Fine-Techno Co., Ltd.; Fujicure-FXR-1090FA from T&K Toka; 1,2-dimethyl imidazole from Shikoku Chemicals Corporation; 2E4MI from Evonik; D230 and DMP30 from Huntsman; and Gaskamine 240 from Mitsubishi Gas Chemical.

In some embodiments of the present invention, the amount of the curing agent in the second part is from 5 to 100%, preferably from 10 to 70%, and more preferably from 10 to 50% by weight based on the total weight of the second part.

### Optional additive

### <Reactive diluent>

Reactive diluent may be presented in the first part of the thermally conductive potting composition as an optional additive to control the flowability. Suitable reactive diluent includes but is not limited to diglycidyl ether of resorcinol, diglycidyl ether of cyclohexane dimethanol, diglycidyl ether of neopentyl glycol, and triglycidyl ether of trimethylolpropane. The reactive diluent can be used alone or in combination.

Examples of commercially available reactive diluents are, for example, Modifier 48 from Hexion Specialty Chemical; and EPODIL 747, EPODIL 748, EPODIL 757 from Air Products and Chemical Inc..

In some embodiments of the present invention, the amount of the reactive diluent in the first part is preferably from 0 to 60%, and more preferably from 5 to 40% by weight based on the total weight of the first part.

in a preferred embodiment, the thermally conductive potting composition comprises:
(a) a first part comprising:
   (i) from 2 to 70% by weight of the first part of at least one epoxy resin;
   (ii) from 20 to 80% by weight of the first part of at least one first thermally conductive filler having an average diameter greater than or equal to 0.01 µm and less than 20 µm;
   (iii) from 20 to 80% by weight of the first part of at least one second thermally conductive filler having an average diameter from 20 to 150 µm;
   (iv) from 0.01 to 10% by weight of the first part of at least one metal complex; and
   (v) from 0 to 60% by weight of the first part of at least one reactive diluent;
      wherein the weight percentages of all components in the first part add up to 100%;
      wherein the metal complex has one organic ligand represented by the following general formula
         (1) which is coordinatively bounded to a metal atom in the metal complex, 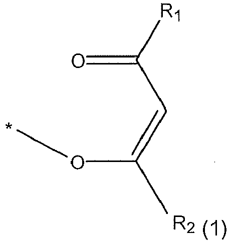
         wherein * represents a coordinating position of the metal atom in the metal complex; and R₁ and R₂ are identical or different, and independently represent optionally substituted univalent organic groups.
(b) a second part comprising at least one curing agent;

The thermally conductive potting composition of the present invention may be prepared by the steps of:
(a) preparing a first part by mixing at least one epoxy resin, at least one thermally conductive filler and at least one metal complex;
(b) preparing a second part by mixing at least one curing agent; and
(c) mixing the first part and the second part at a desired ratio;
   wherein the metal complex in the first part has one organic ligand represented by the following general formula (1) which is coordinatively bounded to a metal atom in the metal complex, 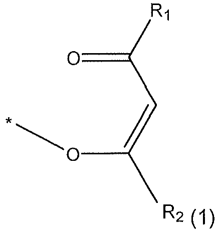 wherein * represents a coordinating position of the metal atom in the metal complex; and R₁ and R₂ are identical or different, and independently represent optionally substituted univalent organic groups.

Preferably, the thermally conductive potting composition of the present invention may be prepared by the steps of:
(a) preparing a first part by:
   i) mixing at least one epoxy resin with at least one reactive diluent homogenously;
   ii) adding at least one metal complex to the mixture from step i), and mixing the mixture to homogeneity; and
   iii) adding at least one thermally conductive filler to the mixture from step ii), and mixing the mixture to homogeneity;
(b) preparing a second part by mixing at least one curing agent homogenously; and
(c) mixing the first part and the second part at a desired ratio homogenously;
   wherein the metal complex in the first part has one organic ligand represented by the following general formula (1) which is coordinatively bounded to a metal atom in the metal complex, 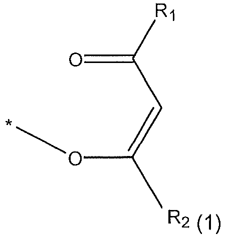 wherein * represents a coordinating position of the metal atom in the metal complex; and R₁ and R₂ are identical or different, and independently represent optionally substituted univalent organic groups.

The first part should be used in a weight ratio to the second part, in the range of 0.7:1 to 1.3:1, and preferably from 0.9:1 to 1.1:1. A person skilled in the art will be able to make appropriate choices among the varies components based on the description, representative examples and guidelines of the present invention to prepare a composition to achieve desired effects.

The first part and the second part prefers to be combined 1 to 10 minutes prior to the use of the thermally conductive potting composition.

The thermally conductive potting composition of the present invention may be cured in a temperature range from 0 to 200°C and applied to substrates by a mixing device.

The thixotropic index of the first part of the thermally conductive potting composition is calculated by dividing the viscosity of the first part measured at shear rate of 1 s⁻¹ by the viscosity of the first part measured at shear rate of 10 s⁻¹. The viscosity of the first part may be determined according to ASTM D3835 -16 at 25°C.

The first part of the thermally conductive potting composition of the present invention preferably has a thixotropic index greater than or equal to 1.2, more preferably greater or equal to 1.6 and even more preferably greater than or equal to 2 at 25°C. With higher thixotropic index, the first part can be stored for a longer period of time with little or no filler sedimentation issue.

The thixotropic index of the thermally conductive potting composition is calculated by dividing the viscosity of the thermally conductive potting composition measured at shear rate of 1 s⁻¹ by the viscosity of the thermally conductive potting composition measured at shear rate of 10 s⁻¹. The viscosity of the thermally conductive potting composition may be determined according to ASTM D3835-16 at 25°C.

The thermally conductive potting composition of the present invention preferably has a thixotropic index less than or equal to 1.4, and more preferably less or equal to 1.2 at 25°C. With lower thixotropic index, the thermally conductive potting composition has good flowability and can be processed easily for potting.

The lap shear strength of the thermally conductive potting composition of the present invention may be assessed according to ASTM D1002 by bonding aluminum substrates.

The thermally conductive potting composition of the present invention preferably has a lap shear strength greater than or equal to 8 Mpa, and more preferably greater than or equal to 9 Mpa when it is applied to aluminum substrates.

### Examples:

The present invention will be further described and illustrated in detail with reference to the following examples. The examples are intended to assist one skilled in the art to better understand and practice the present invention, however, are not intended to restrict the scope of the present invention. All numbers in the examples are based on weight unless otherwise stated.

### Test methods

### <Thixotropic index of the first part of the thermally conductive potting composition>

The thixotropic index of the first part of the thermally conductive potting composition was calculated by dividing the viscosity of the first part measured at shear rate of 1 s⁻¹ by the viscosity of the first part measured at shear rate of 10 s⁻¹. The viscosity of the first part was determined according to ASTM D3835-16 at 25°C using Rheometer MCR 301, from Anton Paar.

### <Thixotropic index of the thermally conductive potting composition>

The thixotropic index of the thermally conductive potting composition was calculated by dividing the viscosity of the thermally conductive potting composition measured at shear rate of 1 s⁻¹ by the viscosity of the thermally conductive potting composition measured at shear rate of 10 s⁻¹. The viscosity of the thermally conductive potting composition was determined according to ASTM D3835-16 at 25 °C using Rheometer MCR 301, from Anton Paar.

### <Lap shear strength of the thermally conductive potting composition>

The lap shear strength of the thermally conductive potting composition of the present invention was assessed according to ASTM D1002 by bonding two aluminum substrates at 25°C, using INSTRON 5569 from company INSTRON. The size of the aluminium substrate was 254X150mm and the thickness of the aluminium substrate was 2mm. The control speed was 10 mm/min.

### Example 1-8

A first part of the adhesive composition sample was prepared according to Table 1 by the steps of:
i) mixing EPIKOTE 240 with Modifier 48 for 2 minutes under 2000 rpm;
ii) adding Plenact AL-M, ACA-AA2, or ACA-EAA1 to the mixture from step i), and mixing the mixture for 2 minutes under 2000 rpm; and
iii) adding thermally conductive fillers of BAK 40 and BAK 10, or RY 20 and CF 5 to the mixture from step ii) and mixing the mixture for 2 minutes under 2000 rpm.

The first part of the thermally conductive potting composition was subjected to the thixotropic index test mentioned above.

A second part of the adhesive composition sample was prepared according to Table 2 by mixing DMP30 and DH230 for 2 minutes under 2000 rpm.

The first part and the second part of the thermally conductive potting composition sample were mixed in a weight ratio of 1:1 and were mixed for 2 minutes under 2000 rpm. The thermally conductive potting composition was then subjected to the thixotropic index and lap shear strength test mentioned above.

The mixing apparatus used in preparing the first part, the second part and the thermally conductive potting composition was SpeedMixers DAC600, from FlackTek.

**Table 1. First part of the thermally conductive potting composition**

| Components | Weight (%) | | | | | | | |
|---|---|---|---|---|---|---|---|---|
| | Ex 1 | Ex 2 | Ex 3 | Ex 4 | Ex 5 | Ex 6 | Ex 7 | Ex 8 |
| EPIKOTE 240*¹ | 25.9 | 25.8 | 25.5 | 25.1 | 25.8 | 25.8 | 26.0 | 25.8 |
| Modifier 48*² | 6.5 | 6.4 | 6.4 | 6.3 | 6.4 | 6.4 | 6.5 | 6.4 |
| Plenact AL-M *³ | 0.4 | 0.8 | 1.6 | 3.1 | | 0.8 | | |
| ACA-AA2*⁴ | | | | | 0.8 | | | |
| ACA-EAA1*⁵ | | | | | | | | 0.8 |
| BAK 40*⁶ | 53.8 | 53.6 | 53.2 | 52.4 | 53.6 | | 54.0 | 53.6 |
| BAK 10*⁷ | 13.4 | 13.4 | 13.3 | 13.1 | 13.4 | | 13.5 | 13.4 |
| RY 20*⁸ | | | | | | 53.6 | | |
| CF 5*⁹ | | | | | | 13.4 | | |

| | | | | | | | | |
|---|---|---|---|---|---|---|---|---|
| 1* EPIKOTE 240 (epoxy resin, from Hexion); 2* Modifier 48 (aliphatic triglycidyl ether, from Hexion); 3* Plenact AL-M (alkylacetoacetate aluminum di-isopropylate, from Ajinomoto fine-techno); 4* ACA-AA2 (aluminum isopropoxide bis(acetylacetonate), from Nanjing Capature Chemical); 5* ACA-EAA1 (aluminum diisopropoxy ethoxyacetoacetyl, from Nanjing Capature Chemical); 6*BAK 40 (spherical aluminium oxide with an average diameter of 40 µm, from Shanghai Bestry Performance Materials); 7*BAK 10 (spherical aluminium oxide with an average diameter of 10 µm, from Shanghai Bestry Performance Materials); 8*RY 20 (spherical aluminium oxide with an average diameter of 20 µm, from Shanghai Yu Rui New Material technology Co., Ltd.); 9*CF 5 (spherical aluminium oxide with an average diameter of 5 µm, from Shanghai Yu Rui New Material technology Co., Ltd.); | | | | | | | | |

**Table 2. Second part of the thermally conductive potting composition**

| Components | Weight (%) | | | | | | | |
|---|---|---|---|---|---|---|---|---|
| | Ex 1 | Ex 2 | Ex 3 | Ex 4 | Ex 5 | Ex 6 | Ex 7 | Ex 8 |
| DMP30 *¹⁰ | 2.9 | 2.9 | 2.9 | 2.9 | 2.9 | 2.9 | 2.9 | 2.9 |
| D230*¹¹ | 97.1 | 97.1 | 97.1 | 97.1 | 97.1 | 97.1 | 97.1 | 97.1 |

| | | | | | | | | |
|---|---|---|---|---|---|---|---|---|
| 10*DMP30 (2,4,6-Tris(dimethylaminomethyl)phenol, from Huntsman); 11*D230 (polyetheramines, from Huntsman); | | | | | | | | |

In Table 3, the thixotropic index of the first part of the thermally conductive potting composition is reported. Through Examples 1 to 6, all the samples of the first part showed high thixotropic index, and therefore, they had little or no filler sedimentation even after a long period time of storage. On the contrary, samples of the first part in Example 7 and 8 exhibited severe filler sedimentation. Additionally, the thixotropic index of the thermally conductive potting composition after the first part and the second part were mixed and tested is also reported. Through Examples 1 to 6, all the samples of the thermally conductive porting composition showed low thixotropic index, and therefore the thermally conductive potting composition had good flowability and could be easily used for the potting process.

**Table 3. Thixotropic Index**

| | Ex 1 | Ex 2 | Ex 3 | Ex4 | Ex 5 | Ex 6 | Ex 7 | Ex 8 |
|---|---|---|---|---|---|---|---|---|
| First part of the thermally conductive potting composition | 1.43 | 1.61 | 1.76 | 1.63 | 1.26 | 2.19 | 1.08 | 1.06 |
| the thermally conductive potting composition | 1.17 | 1.16 | 1.18 | 1.33 | 1.1 | 1.2 | 1.13 | 1.1 |

In Table 4, the lap shear strength of the thermally conductive potting composition is reported. The thermally conductive potting composition samples in Examples 1 to 6 had good lap shear strength to aluminum substrate.

**Table 4. Lap Shear Strength**

| | Ex 1 | Ex 2 | Ex 3 | Ex 4 | Ex 5 | Ex 6 | Ex 7 | Ex 8 |
|---|---|---|---|---|---|---|---|---|
| the thermally conductive potting composition | 8.3 Mpa | 10 Mpa | 9.8 Mpa | 9.8 Mpa | 9.3 Mpa | 9.6 Mpa | 7.6 Mpa | 9.4 Mpa |

## Claims

1. A thermally conductive potting composition comprising:
(a) a first part comprising:
at least one epoxy resin;
at least one thermally conductive filler; and
at least one metal complex;
(b) a second part comprising at least one curing agent;
wherein the metal complex in the first part has one organic ligand represented by the following general formula (1) which is coordinatively bounded to the metal atom in the metal complex, 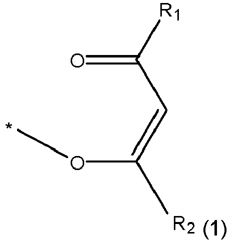 wherein * represents a coordinating position to the metal atom in the metal complex; and R₁ and R₂ are identical or different, and independently represent optionally substituted univalent organic groups.

2. The thermally conductive potting composition according to claim 1, wherein R₁ and R₂ are preferably optionally substituted C₁ to C₂₀ alkyl groups, alkenyl groups or alkoxyl groups.

3. The thermally conductive potting composition according to claim 1 or 2, wherein the metal atom of the metal complex in the first part is preferably aluminum or titanium.

4. The thermally conductive potting composition according to any one of the proceeding claims, wherein the metal complex in the first part is preferably in a liquid form.

5. The thermally conductive potting composition according to any one of the proceeding claims, wherein the thermally conductive filler is selected from at least one of metal oxides, metal hydroxides, metal nitrides, metal powders, silicon carbides, silicon borides, graphites, carbon nanotubes, carbon fibers, and preferably the thermally conductive filler is selected from at least one of metal oxides, metal hydroxides, and metal nitrides.

6. The thermally conductive potting composition according to any one of the proceeding claims, wherein the thermally conductive filler is preferably in a spherical shape.

7. The thermally conductive potting composition according to any one of the proceeding claims, wherein thermally conductive filler has an average diameter from 0.01 to 150 µm, preferably from 2 to 70 µm, and more preferably from 5 to 40µm, wherein the average diameter of the thermally conductive filler is preferably measured by light scattering method using LS-POP(6) available from Zhuhai OMEC Instruments Co., Ltd.

8. The thermally conductive potting composition according to any one of the proceeding claims, wherein the first part comprises a first thermally conductive filler having an average diameter greater than or equal to 0.01 µm and less than 20 µm, preferably from 2 to 15 µm, and more preferably from 4 to 10 µm; and a second thermally conductive filler having an average diameter from 20 to 150 µm, preferably from 20 to 70 µm, and more preferably from 20 to 50 µm, wherein the average diameter of the thermally conductive filler is measured by light scattering method using LS-POP(6) available from Zhuhai OMEC Instruments Co., Ltd.

9. The thermally conductive potting composition according to any one of the proceeding claims, wherein at least one reactive diluent is further presented in the first part.

10. The thermally conductive potting composition according to any one of the proceeding claims, comprising:
(a) a first part comprising:
(i) from 2 to 70% by weight of the first part of at least one epoxy resin;
(ii) from 20 to 80% by weight of the first part of at least one first thermally conductive filler having an average diameter greater than or equal to 0.01 µm and less than 20 µm;
(iii) from 20 to 80% by weight of the first part of at least one second thermally conductive filler having an average diameter from 20 to 150 µm;
(iv) from 0.01 to10% by weight of the first part of at least one metal complex; and
(v) from 0 to 60% by weight of the first part of at least one reactive diluent;
wherein the weight percentages of all components in the first part add up to 100%;
(b) a second part comprising at least one curing agent;
wherein the metal complex in the first part has one organic ligand represented by the following general formula (1) which is coordinatively bounded to the metal atom in the metal complex, 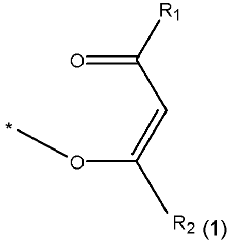 wherein * represents a coordinating position to the metal atom in the metal complex; and R₁ and R₂ are identical or different, and independently represent optionally substituted univalent organic groups.

11. A cured product of the thermally conductive potting composition according to any one of the proceeding claims.

12. An article bonded, filled or coated by the cured thermally conductive potting composition according to claim 11.

13. A process of making a thermally conductive potting composition comprising steps of:
(a) preparing a first part:
i) mixing at least one epoxy resin with at least one reactive diluent homogenously;
ii) adding at least one metal complex to the mixture from step i), and mixing the mixture to homogeneity; and
iii) adding at least one thermally conductive filler to the mixture from step ii), and mixing the mixture to homogeneity;
(b) preparing a second part by mixing at least one curing agent homogenously
(c) mixing the first part and the second part at a desired ratio;
wherein the metal complex in the first part has one organic ligand represented by the following general formula (1) which is coordinatively bounded to the metal atom in the metal complex, 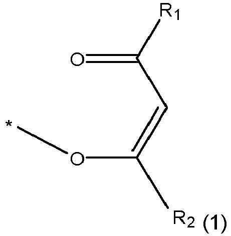 wherein * represents a coordinating position to the metal atom in the metal complex; and R₁ and R₂ are identical or different, and independently represent optionally substituted univalent organic groups.

## Patentansprüche

1. Wärmeleitfähige Vergusszusammensetzung, umfassend:
(a) einen ersten Teil, umfassend:
mindestens ein Epoxidharz;
mindestens einen wärmeleitfähigen Füllstoff; und
mindestens einen Metallkomplex;
(b) einen zweiten Teil, umfassend mindestens ein Aushärtungsmittel;
wobei der Metallkomplex in dem ersten Teil einen organischen Liganden aufweist, der durch die folgende allgemeine Formel (1) dargestellt ist, die koordinativ an das Metallatom in dem Metallkomplex gebunden ist, 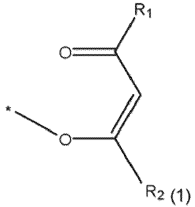 wobei * eine koordinierende Position zu dem Metallatom in dem Metallkomplex darstellt; und R₁ und R₂ gleich oder verschieden sind und unabhängig optional substituierte einwertige organische Gruppen darstellen.

2. Wärmeleitfähige Vergusszusammensetzung nach Anspruch 1, wobei R₁ und R₂ vorzugsweise optional substituierte C₁ bis C₂₀-Alkylgruppen, -Alkenylgruppen oder -Alkoxylgruppen sind.

3. Wärmeleitfähige Vergusszusammensetzung nach Anspruch 1 oder 2, wobei das Metallatom des Metallkomplexes in dem ersten Teil vorzugsweise Aluminium oder Titan ist.

4. Wärmeleitfähige Vergusszusammensetzung nach einem der vorstehenden Ansprüche, wobei der Metallkomplex in dem ersten Teil vorzugsweise in einer flüssigen Form vorliegt.

5. Wärmeleitfähige Vergusszusammensetzung nach einem der vorstehenden Ansprüche, wobei der wärmeleitfähige Füllstoff ausgewählt ist aus mindestens einem von Metalloxiden, Metallhydroxiden, Metallnitriden, Metallpulvern, Siliciumcarbiden, Siliciumboriden, Graphiten, Kohlenstoffnanoröhrchen, Kohlenstofffasern und vorzugsweise der wärmeleitfähige Füllstoff aus mindestens einem von Metalloxiden, Metallhydroxiden und Metallnitriden ausgewählt ist.

6. Wärmeleitfähige Vergusszusammensetzung nach einem der vorstehenden Ansprüche, wobei der wärmeleitfähige Füllstoff vorzugsweise in einer sphärischen Form vorliegt.

7. Wärmeleitfähige Vergusszusammensetzung nach einem der vorstehenden Ansprüche, wobei der wärmeleitfähige Füllstoff einen durchschnittlichen Durchmesser von 0,01 bis 150 µm aufweist, vorzugsweise von 2 bis 70 µm, und mehr bevorzugt von 5 bis 40 µm, wobei der durchschnittliche Durchmesser des thermisch leitfähigen Füllstoffs vorzugsweise durch ein Lichtstreuverfahren unter Verwendung von LS-POP(6) gemessen wird, das von Zhuhai OMEC Instruments Co., Ltd. erhältlich ist.

8. Wärmeleitfähige Vergusszusammensetzung nach einem der vorstehenden Ansprüche, wobei der erste Teil einen ersten wärmeleitfähigen Füllstoff umfasst, der einen durchschnittlichen Durchmesser von mehr als oder gleich 0,01 µm und weniger als 20 µm aufweist, vorzugsweise von 2 bis 15 µm und mehr bevorzugt von 4 bis 10 µm; und einen zweiten wärmeleitfähigen Füllstoff, der einen durchschnittlichen Durchmesser von 20 bis 150 µm aufweist, vorzugsweise von 20 bis 70 µm und mehr bevorzugt von 20 bis 50 µm, wobei der durchschnittliche Durchmesser des wärmeleitfähigen Füllstoffs durch ein Lichtstreuverfahren unter Verwendung von LS-POP(6) gemessen wird, das von Zhuhai OMEC Instruments Co., Ltd. erhältlich ist.

9. Wärmeleitfähige Vergusszusammensetzung nach einem der vorstehenden Ansprüche, wobei mindestens ein reaktives Verdünnungsmittel ferner in dem ersten Teil gezeigt ist.

10. Wärmeleitfähige Vergusszusammensetzung nach einem der vorstehenden Ansprüche, umfassend:
(a) einen ersten Teil, umfassend:
(i) zu 2 bis 70 Gew.-% den ersten Teil mindestens eines Epoxidharzes;
(ii) zu 20 bis 80 Gew.-% den ersten Teil mindestens eines ersten thermisch leitfähigen Füllstoffs, der einen durchschnittlichen Durchmesser von mehr als oder gleich 0,01 µm und weniger als 20 µm aufweist;
(iii) zu 20 bis 80 Gew.-% den ersten Teil mindestens eines zweiten thermisch leitfähigen Füllstoffs, der einen durchschnittlichen Durchmesser von 20 bis 150 µm aufweist;
(iv) zu 0,01 bis 10 Gew.-% den ersten Teil mindestens eines Metallkomplexes; und
(v) zu 0 bis 60 Gew.-% den ersten Teil mindestens eines reaktiven Verdünnungsmittels;
wobei sich die Gewichtsprozente aller Komponenten in dem ersten Teil zu 100 % addieren;
(b) einen zweiten Teil, umfassend mindestens ein Aushärtungsmittel;
wobei der Metallkomplex in dem ersten Teil einen organischen Liganden aufweist, der durch die folgende allgemeine Formel (1) dargestellt ist, die koordinativ an das Metallatom in dem Metallkomplex gebunden ist, 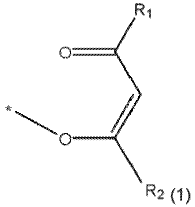 wobei * eine koordinierende Position zu dem Metallatom in dem Metallkomplex darstellt; und R₁ und R₂ gleich oder verschieden sind und unabhängig optional substituierte einwertige organische Gruppen darstellen.

11. Gehärtetes Produkt der wärmeleitfähigen Vergusszusammensetzung nach einem der vorstehenden Ansprüche.

12. Artikel, der durch die gehärtete wärmeleitfähige Vergusszusammensetzung nach Anspruch 11 gebunden, gefüllt oder beschichtet ist.

13. Verfahren zum Herstellen einer wärmeleitfähigen Vergusszusammensetzung, umfassend die Schritte:
(a) Herstellen eines ersten Teiles:
i) Homogenmischen mindestens eines Epoxidharzes mit mindestens einem reaktiven Verdünnungsmittel;
ii) Zugeben mindestens eines Metallkomplexes zu der Mischung aus Schritt i) und Mischen der Mischung bis zu einer Homogenität; und
iii) Zugeben mindestens eines thermisch leitfähigen Füllstoffs zu der Mischung aus Schritt ii) und Mischen der Mischung bis zu einer Homogenität;
(b) Herstellen eines zweiten Teils durch das Homogenmischen mindestens eines Aushärtungsmittels
(c) Mischen des ersten Teils und des zweiten Teils in einem gewünschten Verhältnis;
wobei der Metallkomplex in dem ersten Teil einen organischen Liganden aufweist, der durch die folgende allgemeine Formel (1) dargestellt ist, die koordinativ an das Metallatom in dem Metallkomplex gebunden ist, 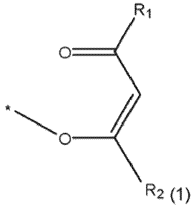 wobei * eine koordinierende Position zu dem Metallatom in dem Metallkomplex darstellt; und R₁ und R₂ gleich oder verschieden sind und unabhängig optional substituierte einwertige organische Gruppen darstellen.

## Revendications

1. Composition d'enrobage thermoconductrice comprenant :
(a) une première partie comprenant :
au moins une résine époxy ;
au moins une charge thermoconductrice ; et
au moins un complexe métallique ;
(b) une seconde partie comprenant au moins un agent de durcissement ;
dans laquelle le complexe métallique dans la première partie a un ligand organique représenté par la formule générale (1) suivante qui est lié par coordination à l'atome métallique dans le complexe métallique, 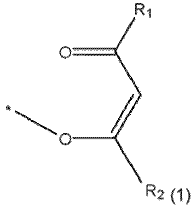 dans laquelle * représente une position de coordination avec l'atome métallique dans le complexe métallique ; et R₁ et R₂ sont identiques ou différents, et représentent indépendamment des groupes organiques univalents facultativement substitués.

2. Composition d'enrobage thermoconductrice selon la revendication 1, dans laquelle R₁ et R₂ sont de préférence des groupes alkyle, groupes alcényle ou groupe alcoxyle en C₁ à C₂₀, facultativement substitués.

3. Composition d'enrobage thermoconductrice selon la revendication 1 ou 2, dans laquelle l'atome métallique du complexe métallique dans la première partie est de préférence aluminium ou titane.

4. Composition d'enrobage thermoconductrice selon l'une quelconque des revendications précédentes, dans laquelle le complexe métallique dans la première partie est de préférence sous une forme liquide.

5. Composition d'enrobage thermoconductrice selon l'une quelconque des revendications précédentes, dans laquelle la charge thermoconductrice est choisie parmi au moins l'un parmi oxydes métalliques, hydroxydes métalliques, nitrures métalliques, poudres métalliques, carbures de silicium, borures de silicium, graphites, nanotubes de carbone, fibres de carbone, et de préférence la charge thermoconductrice est choisie parmi au moins l'un parmi oxydes métalliques, hydroxydes métalliques et nitrures métalliques.

6. Composition d'enrobage thermoconductrice selon l'une quelconque des revendications précédentes, dans laquelle la charge thermoconductrice est de préférence sous une forme sphérique.

7. Composition d'enrobage thermoconductrice selon l'une quelconque des revendications précédentes, dans laquelle la charge thermoconductrice a un diamètre moyen allant de 0,01 à 150 µm, de préférence de 2 à 70 µm, et plus préférablement de 5 à 40 µm, dans laquelle le diamètre moyen de la charge thermoconductrice est de préférence mesuré par un procédé de diffusion de lumière à l'aide d'un LS-POP(6) disponible auprès de Zhuhai OMEC Instruments Co., Ltd.

8. Composition d'enrobage thermoconductrice selon l'une quelconque des revendications précédentes, dans laquelle la première partie comprend une première charge thermoconductrice ayant un diamètre moyen supérieur ou égal à 0,01 µm et inférieur à 20 µm, de préférence de 2 à 15 µm, et plus préférablement de 4 à 10 µm ; et une seconde charge thermoconductrice ayant un diamètre moyen allant de 20 à 150 µm, de préférence de 20 à 70 µm, et plus préférablement de 20 à 50 µm, dans laquelle le diamètre moyen de la charge thermoconductrice est mesuré par un procédé de diffusion de lumière à l'aide d'un LS-POP(6) disponible auprès de Zhuhai OMEC Instruments Co., Ltd.

9. Composition d'enrobage thermoconductrice selon l'une quelconque des revendications précédentes, dans laquelle au moins un diluant réactif est en outre présenté dans la première partie.

10. Composition d'enrobage thermoconductrice selon l'une quelconque des revendications précédentes, comprenant :
(a) une première partie comprenant :
(i) de 2 à 70 % en poids de la première partie d'au moins une résine époxy ;
(ii) de 20 à 80 % en poids de la première partie d'au moins une première charge thermoconductrice ayant un diamètre moyen supérieur ou égal à 0,01 µm et inférieur à 20 µm ;
(iii) de 20 à 80 % en poids de la première partie d'au moins une seconde charge thermoconductrice ayant un diamètre moyen allant de 20 à 150 µm ;
(iv) de 0,01 à 10 % en poids de la première partie d'au moins un complexe métallique ; et
(v) de 0 à 60 % en poids de la première partie d'au moins un diluant réactif ;
dans laquelle les pourcentages en poids de tous les composants dans la première partie s'élèvent à 100 % ;
(b) une seconde partie comprenant au moins un agent de durcissement ;
dans laquelle le complexe métallique dans la première partie a un ligand organique représenté par la formule générale (1) suivante qui est lié par coordination à l'atome métallique dans le complexe métallique, 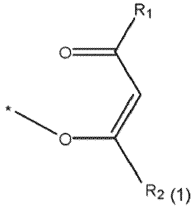 dans laquelle * représente une position de coordination avec l'atome métallique dans le complexe métallique ; et R₁ et R₂ sont identiques ou différents, et représentent indépendamment des groupes organiques univalents facultativement substitués.

11. Produit durci de la composition d'enrobage thermoconductrice selon l'une quelconque des revendications précédentes.

12. Article lié, chargé ou revêtu par la composition d'enrobage thermoconductrice durcie selon la revendication 11.

13. Processus de fabrication d'une composition d'enrobage thermoconductrice comprenant les étapes consistant à :
(a) préparer une première partie :
i) mélanger au moins une résine époxy avec au moins un diluant réactif de manière homogène ;
ii) ajouter au moins un complexe métallique au mélange provenant de l'étape i), et mélanger le mélange jusqu'à homogénéité ; et
iii) ajouter au moins une charge thermoconductrice au mélange provenant de l'étape ii), et mélanger le mélange jusqu'à homogénéité ;
(b) préparer une seconde partie en mélangeant au moins un agent de durcissement de manière homogène
(c) mélanger la première partie et la seconde partie à un rapport souhaité ;
dans laquelle le complexe métallique dans la première partie a un ligand organique représenté par la formule générale (1) suivante qui est lié par coordination à l'atome métallique dans le complexe métallique, 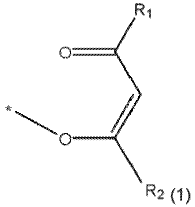 dans lequel * représente une position de coordination avec l'atome métallique dans le complexe métallique ; et R₁ et R₂ sont identiques ou différents, et représentent indépendamment des groupes organiques univalents facultativement substitués.
